Europäisches Patentamt

European Patent Office

Office européen des brevets

(11) Veröffentlichungsnummer: **0 292 639 B1**

# EUROPÄISCHE PATENTSCHRIFT

(45) Veröffentlichungstag der Patentschrift: **21.04.93**

(21) Anmeldenummer: **88100863.5**

(22) Anmeldetag: **21.01.88**

(51) Int. Cl.⁵: **G08B 19/02**

(54) **Verfahren zum Ausgeben eines Vorwarnsignals für die Glättebildungsgefahr auf einer Verkehrsfläche.**

(30) Priorität: **17.02.87 DE 3704953**

(43) Veröffentlichungstag der Anmeldung:
**30.11.88 Patentblatt 88/48**

(45) Bekanntmachung des Hinweises auf die
Patenterteilung:
**21.04.93 Patentblatt 93/16**

(84) Benannte Vertragsstaaten:
**AT BE CH DE FR GB LI NL SE**

(56) Entgegenhaltungen:
**FR-A- 2 234 423**
**US-A- 3 596 264**

(73) Patentinhaber: **ANT Nachrichtentechnik GmbH
Gerberstrasse 33
W-7150 Backnang(DE)**

(72) Erfinder: **Richter, Gerold, Prof. Dr.
Zum Lorenzberg 4
W-5501 Mertesdorf(DE)**

**Beschreibung**

Die Erfindung geht aus von einem Verfahren zum Ausgeben eines Vorwarnsignals, insbesondere für die Gefahr von Glätte auf einer Verkehrsfläche.

Aus dem Prospekt "Glätte-Frühmeldesystem GFMS" der Firma ANT Nachrichtentechnik GmbH, ANT 1656 10.86 ist es bekannt, meteorologische Daten mittels Sensoren aufzunehmen und zu einer Zentraleinrichtung zu übertragen. Dort werden die Meßdaten zu einem Glätte-Warnsignal verarbeitet. In den zu überwachenden Verkehrsflächen - Fahrbahnen - sind Sensorblöcke eingelassen, mittels derer die Fahrbahn-Temperatur, die Fahrbahn-Feuchte-Bedeckung, die Fahrbahn-Feuchte-Höhe und der Fahrbahn-Restsalzgehalt ermittelt wird. Am Fahrbahnrand sind jeweils Masten angeordnet, die Sensoren für die Luft-Temperatur, Luft-Feuchtigkeit, Fahrbahn-Bedeckung (Infrarot-Meßgerät) aufweisen. Von jeder Meßstation aus werden die nach einem Grobtakt gemessenen Daten über eine Fernwirk-Leitung zu einer Zentrale übertragen.

Aus FR-A-2 234 423 ist weiter ein System zum Steuern einer Straßenoberflächen-Heizung bekannt, das Zustand und Veränderung der meterologischen Daten berücksichtigt.

Aufgabe der Erfindung ist es, ein Verfahren zum Ausgeben eines Vorwarnsignals aufgrund der Ermittlung von Witterungseinflüssen anzugeben, welches eine längerfristige und sichere Prognose der Wetterentwicklung, insbesondere der Glättebildung, ermöglicht. Diese Aufgabe wird durch die Schritte gemäß Anspruch 1 gelöst. Die Ansprüche 2 bis 8 zeigen Ausgestaltungen dieses Verfahrens auf.

Das Verfahren nach der Erfindung weist folgende Vorteile auf:
- charakteristische örtliche Gegebenheiten der Meßorte (Sonneneinstrahlung, Höhenlage, Nebelbildung ...) und ihre charakteristische Entwicklung bei der Ermittlung des Vorwarnsignals werden mitberücksichtigt,
- der Winterdienst wird durch die Langzeitprognose optimiert, insbesondere durch wirtschaftlicheren Einsatz von Streumitteln.

Anhand der Zeichnungen wird die Erfindung nun näher erläutert. Es zeigen

Fig. 1 Den Abfrageweg der momentanen Glättegefahr,

Fig. 2 die Verknüpfung der Parameter zum Zwecke der Glättewarnung,

Fig. 3 eine Abkühlungskurve,

Fig. 4 eine Abkühlungskurve für Strahlungsnächte aufgenommen an verschiedenen Tagen eines Jahres,

Fig. 5 den prinzipiellen Aufbau einer Zentralstation mit angeschlossenen Meßstationen und

Fig. 6 den Temperaturverlauf während einer Strahlungsnacht in 200 cm und 35 cm Höhe sowie in 2 cm Tiefe.

Für das Verfahren nach der Erfindung werden folgende meteorologischen Meßparameter aufgenommen und ausgewertet:

```
a)    die Lufttemperatur (TL)          )

b)    die Luftfeuchte    (FL)          )  Messung am Mast neben

c)    den Niederschlag indirekt (NF) )  der Fahrbahn

d)    die Fahrbahntemperatur (TF)               )  Messung

e)    die Fahrbahnfeuchte ja/nein (FFB)         )  mittels

f)    die Fahrbahnfeuchte-Höhe (FFH)            )  Kompaktbox

g)    den Restsalzgehalt auf der Fahrbahn (SR) )  in der Fahr-
                                                  bahn

h)    die Niederschlagsmenge (NFM)              )
                                                  alternativ
i)    die Niederschlagsmeldung ja/nein (NM)     )

k)    der Windweg (WW)

l)    die Windrichtung (WR)
```

Zur Sensorik der einzelnen Parameter, ihrer Meßgenauigkeit und der möglichen Problematik ist folgendes anzumerken:

zu a) Lufttemperatur (TL)

Verwendet wird ein Thermo-Hydrogeber mit PT 100 im Strahlungsschutz. Die Genauigkeit liegt bei ∓ 0,1° C. Das Gerät ist für den Dauerbetrieb geeignet, falls der Konstantstrom gewährleistet ist. Für Thermo-Geber im Winterbetrieb ist es sinnvoll, eine Prüfmöglichkeit für den Konstantstrom vorzusehen, z.B. über eine Anzeige der Referenztemperatur. Die Entfernung zwischen Geber und Aufnahmegerät sollte 100 m nicht überschreiten. Eine größere Entfernung zwischen Geber und Aufnahmegerät ist dann notwendig, wenn von einem Gerät aus mehrere Gefahrenpunkte zu messen sind.

zu b) Luftfeuchte (FL)

Die Messung erfolgt durch ein Haarhygrometer im Thermo-Hydrogeber mit Strahlungsschutz. Die Meßgenauigkeit ist mit 5 % rel. Luftfeuchte einzuschätzen, was hinreichend ist. Es ergeben sich am Fahrbahnrand u.U. Probleme durch Gischtaufwirbelung und durch Verschmutzung der Hygrometer-Harfe. Wegen der alterungsbedingten Dejustierung ist eine jährliche Nacheichung des Geräts erforderlich.

Zu c) Niederschlag indirekt (NF)

Es handelt sich nicht um eine direkte Niederschlagsmessung, sondern um die Aufnahme der Fahrbahnfeuchtigkeit durch einen Infrarot-Sensor am Mast in 6 Stufen. Bei nasser Fahrbahn verändert sich das Reflexionsverhalten, welches ausgewertet wird. In Abhängigkeit von der Helligkeit der Fahrbahndecke erfolgt eine Selbsteichung der Anzeige. Die Zustände der trockenen und der feuchten Fahrbahn sowie der Schneebedeckung werden zuverlässig ermittelt.

zu d) Fahrbahntemperatur (TF)

Die Messung erfolgt durch ein Platin-Thermometer mit einem PT 100 im Metallrohr, der 10 mm unter der Fahrbahnoberfläche in die Kompaktbox eingegossen ist. Die Meßgenauigkeit und die Problematik der Gewährleistung eines Konstantstroms sind wie beim Pt 100 unter a) einzuschätzen. Die Wärmeleitfähigkeit und die spezifische Wärme (Energieübertragung Luft/Box, innerhalb der Box und von der Box zu unterschiedlichen Straßenbelägen) kann die Meßgenauigkeit beeinträchtigen. Es müssen dann entsprechende Meßwertkorrekturen vorgesehen werden. Wegen der Albedo sollten die Farbe und Helligkeit der Box den durchschnittlichen Verhältnissen der Straßendecke entsprechen. bei der Auswertung muß beachtet werden, daß es sich hier im Gegensatz zur Infrarot-Sensorik nicht um ein selbsteichendes System handelt.

zu e) Fahrbahnfeuchte ja/nein (FFB)

Sie wird durch 6 Stegelektroden an der Oberfläche der Kompaktbox gemessen. Die Angabe des Befeuchtungsgrades erfolgt theoretisch in 6 Stufen. Wegen des relativ kleinen Meßfeldes gibt es viele Möglichkeiten einer zufälligen Verfälschung (Übersprühen von Gischt, Schwierigkeiten des exakten und niveaugleichen Einbaus in die Fahrbahndecke, Veränderungen im Microrelief der Fahrbahn im Laufe der Zeit). Eine ergänzende Messung der Fahrbahnfeuchte durch die Infrarot-Sensorik auch hinsichtlich der sicheren Beurteilung einer flächendeckenden Fahrbahnfeuchte, möglicherweise auch des Grades der Befeuchtung ist bedarfsweise vorzusehen.

zu f) Fahrbahn-Feuchtehöhe (FFH)

Sie wird auf einer flachen Kuppel der Kompaktbox durch 4 Stiftelektroden 1 mm über der Oberfläche und durch eine weitere Stiftelektrode 2 mm über der Oberfläche der Box gemessen. Die Angabe der Fahrbahn = 1 mm bzw. = 2 mm). Mögliche Fehler ergeben sich aus dem Einbau der Box in das Microrelief der Fahrbahn, aus Veränderungen in diesem Microrelief nahe der Box, aus versprühter Gischt und aus dem häufigen Vorhandensein von Längsgefälle (an Steigungen) und Quergefälle (durch Überhöhung von Kurven). Der Grad der Befeuchtung kann gegebenenfalls durch die Infrarot-Sensorik erfaßt werden. Die nachfolgend betrachtete SR-Messung kann die FFH-Ermittlung gegebenenfalls entbehrlich machen.

zu g) Restsalzgehalt (SR)

Dieser wird in einem flachen Trichter an der Oberfläche der Box durch ein Elektrodenpaar erfaßt, welches die Konzentration der Salzlösung bestimmt. Die Aussage ist bei Fahrbahnfeuchte die Bestimmung des zu erwartenden Gefrierpunktes (des rechnerischen Gefrierpunktes) bei gegebener Restsalz-Konzentration. Die SR-Anzeige liefert nur Meßwerte, wenn die Fahrbahn feucht oder naß ist, die Exaktheit der Berechnung ist nur gegeben, wenn der Meßtrichter mit Wasser gefüllt ist. Da die Meßwertspannung bei gefrierender Nässe eine Unstetigkeit aufweist, kann dadurch der Zeitpunkt des Überfrierens festgehalten werden. Wenn das Überfrieren auf der Fahrbahn dem Gefrieren des Wassers im Meßtrichter vorausläuft, kann eine entsprechende Korrektur vorgenommen werden. Die Sensorik liefert eine außerordentlich wichtige Information für die Vorhersage, vor allem im Falle der Bildung von Eisglätte. Für die Fälle der Bildung von Glatteis und Reifglätte ohne vorherige Nässebildung auf der Fahrbahn sind Erfahrungswerte mitzuberücksichtigen.

zu h) Niederschlagsmenge (NFM)

Sie wird am Mast mittels eines Niederschlagsgebers mit Wippe und Impulszählung in Stufen von 0,2 mm $\triangleq$ 0,2 l/m$^2$) ermittelt. Die Impulszählung bietet hinsichtlich der Energieversorgung selbst keine Probleme. Im Winter muß das System jedoch beheizt werden, beispielsweise mit Propangas oder durch bekannte Winterheizungen für meteorologische Geräte. Eine weitere Möglichkeit bietet die Stationierung der Niederschlagsgeber bei den Kabelhäusern für die Energieversorgung entlang den Autobahnen, wo Netzspannung zur Verfügung steht. Die Sensorik für die Fahrbahnfeuchte und die SR-Anzeige machen evtl. eine direkte Niederschlagsmessung entbehrlich.

zu i) Niederschlagsmeldung ja/nein (NM)

Dieses System steht alternativ zu h). Es handelt sich um ein Gerät zur elektrischen Erkennung des Niederschlagsbeginns und des Niederschlagsendes. Eine Sensorfläche wird mit PTC-Widerständen selbstregelnd in mehreren Intensitätsstufen beheizt.

zu k) Windweg (WW)

Der Windweg wird mit dem Schalenkreuz-Anemometer am Mast gemessen. Die Windwegmessung erfolgt über eine Impulszählung je definierter Strecke des Windweges. Diese ist geräteabhängig (z.B. je 100 , Windweg 1 Impuls). Die Anlaufgeschwindigkeit ist bei den verschiedenen Systemen unterschiedlich hoch. Meist liegt sie bei 0,5 m pro Sekunde, und ab etwa 1 m pro Sekunde hat die Messung eine hohe Genauigkeit. Die Datenausgabe erfolgt normalerweise in m/sec oder in km/h.

zu l) Windrichtung (WR)

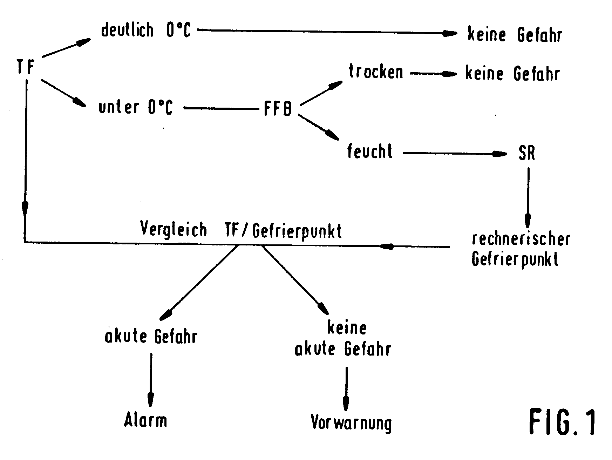

Die Windrichtung wird durch eine Blattwindfahne mit Meßwertgeber für 8 Sektoren a 45° gemessen. Dabei gibt es die Möglichkeit der Momentananzeige zur Zeit der Abfrage und die der Meßwertintegration über den Meßzeitraum.
Für die Beurteilung der momentanen Glättegefahr sind primär folgende Informationen notwendig:
- Fahrbahntemperatur (TF)
- Fahrbahnfeuchte (FFB, FFH, Infrarot-Sensorik NF, alle hier als FFB zusammengefaßt)
- Restsalzgehalt (SR)
Aus diesem Meßparametern ist zu ermitteln, ob derzeit überhaupt eine Glättegefahr besteht (abhängig von TF und FFB), und wenn ja, bei welcher Temperatur die Glättebildung zu erwarten ist (abhängig von SR).
Der Abfrageweg ist in Fig. 1 dargestellt. Zuerst wird die Fahrbahntemperatur TF gemessen und festgestellt, ob sie deutlich größer oder unter 0° C liegt. Für den Fall unter 0° C wird die Fahrbahnfeuchte FFB ermittelt. Bei Vorhandensein von Feuchtigkeit wird unter Berücksichtigung des Restsalzgehaltes SR der Gefrierpunkt errechnet. Ein Vergleich zwischen errechnetem Gefrierpunkt und gemessener Fahrbahntemperatur ermöglicht die Feststellung akute Gefahr (Alarmauslösung) und keine akute Gefahr (Vorwarnung).
Mit dieser Abfrage läßt sich noch keine Prognose stellen. Der obengenannte Zustand "Vorwarnung" bedeutet lediglich, daß bei weiter sinkenden Temperaturen und/oder bei Restsalzgehalts-Veränderung durch N möglicherweise der Gefrierpunkt erreicht wird.

Darum ist es unerläßlich, zur Verdichtung der Informationen über den Straßenzustand weitere Parameter heranzuziehen. Als solche bieten sich an:

a) die Lufttemperatur

TL und TF sind keine voneinander unabhängigen Größen, denn sie sind über den Energietransport in beiden Richtungen miteinander verknüpft. Wesentliche Meßgröße ist dabei die unterschiedliche Strahlungsbilanz beider Medien. Sie führt zu unterschiedlichen Temperaturen. Aus dem Temperaturgefälle resultiert der Transport fühlbarer Wärme über die Wärmeleitung (unbedeutend) und über den vertikalen Massenaustausch: Strahlungsbilanz + Transport fühlbarer Wärme = 0.

Aus meßtechnischen Schwierigkeiten scheidet die Messung der Strahlungsbilanz aus. An ihrer Stelle muß der Vertikalgradient der Temperatur zwischen Fahrbahnoberfläche und Luft herangezogen werden.

Die Strahlungsbilanz der Fahrbahndecke ist am Tage positiv, selbst bei Bewölkung. Dies führt zu Erhöhung von TF. Da die Fahrbahnoberfläche gleichzeitig durch Massenaustausch Energie an die über der Fahrbahn stehende Luft abgibt, wird auch TL erhöht, wenn auch nicht im gleichen Maße.

Die TF-Kurve liegt daher normalerweise über der TL-Kurve (negativer Temperatur-Gradient), vorausgesetzt, daß im Winter nicht advektiv Warmluft zugeführt wird. In der Nacht wird die Strahlungsbilanz negativ. Die TF-Kurve liegt normalerweise unter der TL-Kurve (positiver Temperatur-Gradient), vor allem auf Brücken, die durch Wärmeverlust nach allen Seiten rascher auskühlen.

Bei nächtlichem Strahlungswetter (Bewölkung und Windgeschwindigkeit gering) fließt zusätzlich Kaltluft von den höheren Reliefteilen ab und sammelt sich in Tälern und Senken. Daher ist hier die Depression von TL und TF besonders ausgeprägt. Also lassen sich zwischen TF und TL sowie Strahlungsbilanz allein aus dem Vergleich TF-TL folgende Beziehungen aufstellen:

Norm TF > TL:  Die Fahrbahn wird am Tage durch positive Strahlungsbilanz erwärmt, so daß keine Glättebildung zu erwarten ist, auch wenn TL knapp über dem Gefrierpunkt liegt. Richtwert für eine Prognose ist dann TF.

Norm TF ≤ TL:  Die Fahrbahn wird in der Nacht durch negative Strahlungsbilanz stärker abgekühlt als die Luft. Bei geringer Windgeschwindigkeit besteht Gefahr der Nebelbildung, der Kondensation der Luftfeuchtigkeit auf der Fahrbahn mit anschließendem Gefrieren und die Gefahr der Sublimation. Nahe dem Gefrierpunkt ist somit die Gefahr der Reifglätte gegeben. Richtwerte für eine Prognose sind dann TF, TL und FL, möglicherweise auch die Meldung des Infrarot-Sensors. Unter dieser Konstellation ist auch die Gefahr der Eisglätte gegeben, wenn die Fahrbahn schon feucht ist. Richtwerte für eine Prognose sind dann TF und FFB.

b) die Luftfeuchte (FL):

Sie stellt zum einen eine indirekte Kontrolle für die Meldung der Fahrbahnfeuchte FFB dar, denn bei relativer LF von 85-90% ist oft auch ein Feuchtefilm auf der Fahrbahn zu erwarten, besonders bei winterlichen Lufttemperaturen. Ist die Luftfeuchte hoch und liegt die TF im Gefrierbereich, die TL dagegen höher, so besteht akute Gefahr der Reifglätte (sie unter a)).

c) der Niederschlag (NF)

wird als Niederschlagsmenge (NFM) registriert. Dieser Parameter wird gegenüber der Messung der FFB wahrscheinlich nur einen geringen Vorlauf haben, was NFM betrifft. Bei einem Niederschlag von 0,2 mm (= 0,2 l/m$^2$) als untere Grenze der NFM-Meldung sprechen fallweise auch die Sensoren für FFB an. Wenn die Fahrbahn vorher schon feucht war, wird die Verminderung der SR-Anzeige höhere Niederschläge indirekt melden. Gegebenenfalls liefert hier auch die Meldung der Fahrbahn-Feuchtehöhe (FFH) entsprechende indirekte Hinweise.

Vielleicht könnte man auf die Niederschlagsanzeige wegen der Messung der Fahrbahnfeuchte mit mehreren Methoden (FFB, FFH, Infrarotsensor) ganz verzichten, wenn nicht der Fall des Glatteises ebenfalls zu melden wäre, d.h. das Gefrieren von Regen oder Eisregen auf unterkühlter Fahrbahn. In beiden Fällen besteht die akute Gefahr, daß der auf die Fahrbahn auftreffende Niederschlag sich nicht erst als Nässefilm über die Fahrbahn verteilt, sondern daß er sofort gefriert. Die SR-Anzeige würde dann wohl nicht ansprechen, wahrscheinlich auch nicht die Sensoren für FFB und FFH, es sei denn, die Temperatur an der Oberfläche der Box liegt deutlich über der der Fahrbahn, was ja vermieden werden soll. Das besondere Problem ist dabei der Eisregen. Er ist definiert als Regen, der aus der Warmluft in größerer Höhe durch eine am Boden "klebende" Kaltluftschicht von mehreren hundert Metern bis über 1 km auf eine ebenfalls kalte Oberfläche fällt. Dieser Regen kommt am Boden unterkühlt an und gefriert sofort. Ein beheizter Niederschlagsmesser kann dies erkennen.

Die Einschätzung der Befeuchtung oder Vereisung der Fahrbahn ist ein maßgebendes Kriterium. Bei trockener Fahrbahn besteht keine Gefahr. Den Fall der Schneeglätte erkennt die Infrarot-Sensorik sicherlich einwandfrei. Den Fall der überfrierenden Nässe = Eisglätte kann durch Meldungen von TF und FFB oder durch die Infrarot-Sensorik erkannt werden. Die Gefahr der Reifglätte ist durch den Vergleich der Werte für TF, TL und FL zu erschließen. Nur der Fall des echten Glatteises ist ohne Niederschlagsmessung schwierig.

d) Windrichtung (WR) und Windweg (WW)

sind insofern von Bedeutung, als sie indirekte Hinweise für die zu erwartende Temperatur-Entwicklung geben. Vor allem ist der Windweg von Interesse, weil bei Nacht

- mittlere bis höhere Windgeschwindigkeiten eine stärkere Advektion anzeigen, bei der die ständige Austauschung der Luft die geländebedingten Unterschiede des Temperaturganges unterdrückt. Es ist dann meist nicht mit einem raschen Abfall der Nachttemperatur zu rechnen, auch nicht an den Gefahrenstellen der Glättebildung.

- niedrige Windgeschwindigkeiten $\leq$ 1,5 m/sec die geländebedingte Differenzierung des nächtlichen Temperaturabfalles ermöglichen. Bei solchen autochthonen Wetterlagen mit klarem Himmel kommt es zur Kaltluftbildung und zum Kaltluftabfluß in die Täler und Senken. Dort ist daher - im Gegensatz zu den höher liegenden Reliefteilen - mit einem stärkeren Abfall der Temperaturen zu rechnen, also bei entsprechenden Randbedingungen von TL, TF, daher mit einer deutlichen Änderung von FL und FFB, mit überfrierender Nässe = Eisglätte oder mit Reifglätte. Dem Windweg kommt daher besonders hinsichtlich eines zeitlichen Vorsprunges der Vorwarn-Möglichkeit eine Bedeutung zu. Die Windrichtung schließlich liefert im Vergleich mit der Gelände-Konfiguration Hinweise dafür, ob noch ein Gradientwind als Merkmal des großräumigen Luftaustausches besteht oder ob es sich bei der gemeldeten Luftbewegung geringer Geschwindigkeit um kleinräumige Kaltluftströmungen handelt.

Nachfolgend wird aufgezeigt, wie die Parameter hinsichtlich ihrer Verknüpfung und in Bezug auf die verschiedenen Ursachen der Glättebildung in einem Modell der Abfragemöglichkeiten zusammengefaßt sind. Dabei werden auch die Parameter Niederschlag und Windweg mitgewertet, die gegebenenfalls entbehrlich sind. Der Parameter der Fahrbahnfeuchte, der auf drei verschiedene Arten gemessen werden kann (FFB, FFH und Infrarot-Sensorik), wird als Parameter FFB zusammengefaßt.

Es gibt vier Arten von Glättebildung, die auf unterschiedliche Ursachen zurückzuführen sind:

1. Eisglätte (engl. glazed frost; frz. glace)
= die auf der Fahrbahn vorhandene Nässe gefriert bei weiterer Abkühlung der Fahrbahn auf den vom Restsalzgehalt abhängigen Gefrierpunkt.

2. Glatteis (engl. clear ice, freezing rain; frz. verglas)
= durch Gefrieren von Regen auf der unterkühlten Fahrbahn oder durch Eisregen (unterkühlter Regen) entsteht binnen kurzer Zeit ein glatter, klarer Eisüberzug.

3. Reifglätte (engl. slipperiness by hoar frost; frz. gelée blanche)
= durch Sublimation von Wasserdampf aus feuchter Luft und durch gefrierenden Tau entsteht auf der durch Ausstrahlung stark abgekühlten Fahrbahn ein schuppen- oder nadelförmiger Überzug von Eiskristallen.

4. Schneeglätte (engl. slippery snow cover; frz. glissant de neige)
= durch starkes Befahren wird die Schneedecke auf der Fahrbahn stark verdichtet und daher glatt.

Jeder der Glättearten hat ihre bestimmten Ursachen und entsprechend bestimmte Konstellationen bestimmter meteorologischer Parameter. Es ist notwendig, diese typischen Konstellationen genauer zu untersuchen, weil auf ihnen allein die Glätte-Erkennung und die Prognose der Glättemeldung beruht:

Messung der Parameter → Verknüpfung der Parameter zur momentanen Konstellation → Vergleich dieser mit den typischen Konstellationen der vier Glättearten → Entscheidung über Glättevorwarnung oder Glättewarnung.

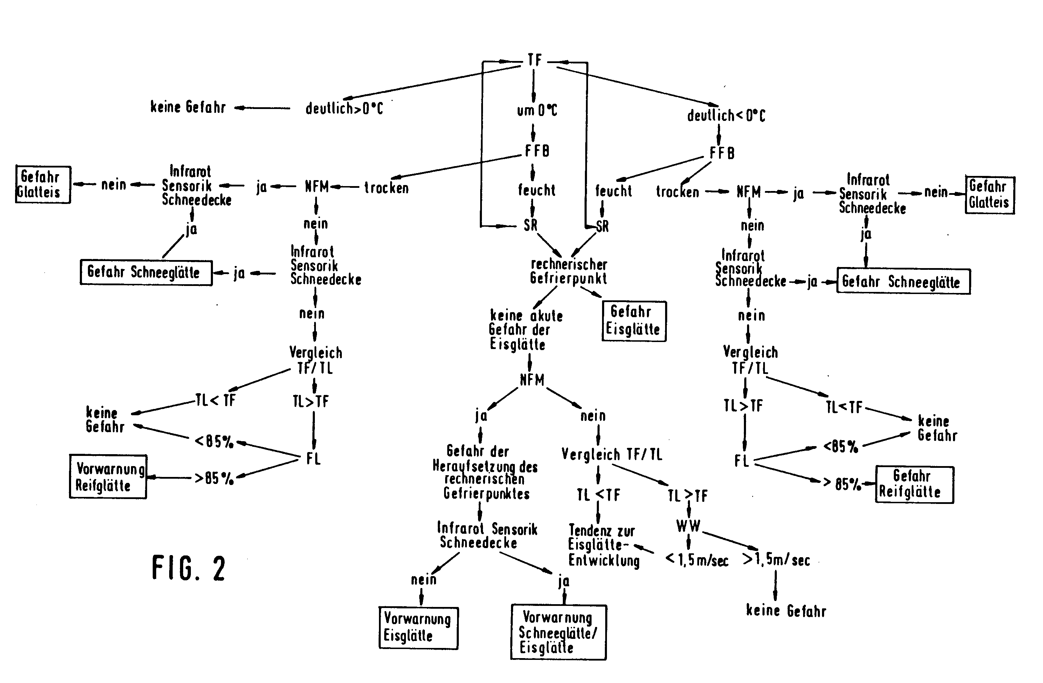

Als typische Konstellationen für Glättebildung kommen in Frage (vgl. Fig. 2):

Eisglätte:

```
TF < 0°C  ←─────────────  TF gegen rechnerischen Gefrierpunkt
TL < 0°C bis um 0°C
FFB feucht bis naß          Entscheidung über Vorwarnung oder
SR 0 bis gering             Alarm
NFM kein Niederschlag
```

Momentane Tendenz:

```
TL > TF              ⎫      keine Tendenz zur weiteren
WW > 1,5 m/sec       ⎬      Erniedrigung von TF
                     ⎭

TL < TF              ⎫      Tendenz zur weiteren Erniedrigung
WW ohne Bedeutung    ⎬      von TF, besonders nachts
                     ⎭
```

Glatteis:

TF < 0°C bis wenig > 0°C
TL < 0°C bis wenig > 0°C
FFB trocken
SR liefert möglicherweise keine Werte
NFM Niederschlag ja
WW meist gering

Momentane Tendenz:

nicht erkennbar

Reifglätte:

TF < 0°C
TL > TF
FFB trocken bis feucht
SR wenn FFB trocken, dann möglicherweise keine Meßwerte
NFM Niederschlag nein
WW gering
FL > 85 %

Momentane Tendenz:

```
     Differenz TF - TL wird größer  ⎫  verstärkte Gefahr
     FL wird höher                  ⎭  der Reifglätte

     Differenz TF - TL wird kleiner ⎫  verminderte Gefahr
     FL wird niedriger              ⎭  der Reifglätte
```

Schneeglätte:

TF < 0°C
TL < 0°C bis wenig > 0°C
FFB trocken bis feucht
Infrarot-Sensor zeigt Schneedecke
SR 0 bis gering
NFM Niederschlag ja oder nein
WW 0 bis groß

Momentane Tendenzen:

```
     TL gleichbleibend oder abfallend ⎫  Möglichkeit der Bildung

     NFM weiterer Schnee-Niederschlag ⎬  und Verstärkung

     Infrarot-Sensor zeigt gleich-    ⎭  der Schneeglätte
     bleibende Helligkeit
```

Versucht man nun, die Überlegungen zu diesen typischen Konstellationen zu einem theoretischen Modell zu verknüpfen, dann sehen die Gutachter zur Zeit folgende Aussage-Möglichkeiten:

Das Modell zur Verknüpfung der Parameter gemäß Fig. 2 geht fürs erste davon aus, daß alle dort einbezogenen Parameter gemessen werden. Die Infrarot-Sensorik ist am geeignetsten, eine sich bildende Schneedecke zu erkennen. Sie wurde daher im Modell mehrmals direkt angeführt.

Eine Reduzierung der Meßparameter z.B. um den Windweg oder den Niederschlag würde bedeuten, daß die entsprechenden Zweige des Modellschemas wegfallen. Dies würde im Falle des Niederschlags möglicherweise zum Wegfall der Glatteiswarnung führen, falls die Infrarot-Sensorik auf dieses Ereignis nicht sofort reagiert.

Das Modell der Glättewarnung geht davon aus, daß die Abfrage der Parameter-Konstellation dann beginnt, wenn TF um 0° C liegt. Es ist also ein Modell der Warnung, nicht der Vorhersage.

Für die Vorhersage gibt es nur eine Möglichkeit: die Vorausbestimmung des Zeitpunktes, an dem die Fahrbahn etwa auf 0°C abgekühlt sein wird. Hierfür gibt es grundsätzlich zwei Möglichkeiten, die einander ergänzen können:

a) Interne Vorhersage aus der zeitlichen Entwicklung der am Ort gemessenen Parameter TL und TF (monostationär).

b) Synoptische Vorhersage durch Auswertung der zeitlichen Entwicklung der Parameter TL und TF im räumlichen Netz mehrerer miteinander verbundener Glättewarngeräte (polystationär).

Beide Wege sollen mit ihren Möglichkeiten nacheinander behandelt werden.

zu a) Methode und Möglichkeiten der internen Vorhersage

Die interne Vorhersage des Zeitpunktes von TF um 0° C muß sich auf die Zeitreihe der Entwicklung von TF stützen und anhand ihrer Tendenz den Zeitpunkt des Erreichens der kritischen Temperatur abschätzen. Da TF und TL jedoch - wie bereits ausgeführt - über den Energietransport miteinander verknüpft sind, sollte eine solche Vorhersage auf der Entwicklung und der Tendenz beider Parameter aufgebaut werden.

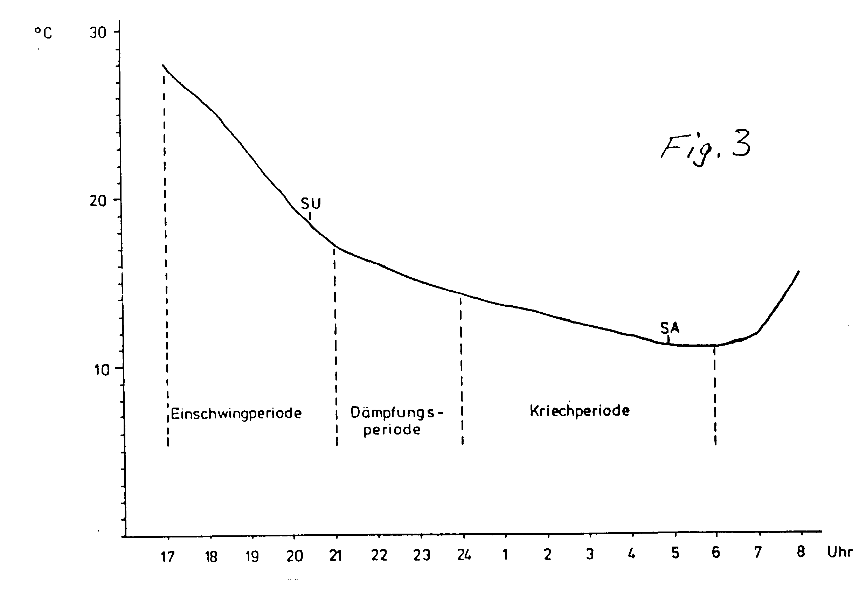

Zunächst werden die Gesetzmäßigkeiten der nächtlichen Entwicklung von TL bei Strahlungswetter, d.h. bei einer Gesamtbewölkung ≦ 3/8 und geringen Windgeschwindigkeiten aufgezeigt (vgl. Fig. 3). Nach dem Erreichen des mittäglichen Einstrahlungsmaximums wird die Einstrahlung im Laufe des Nachmittags mit dem kleiner werdenden Einstrahlungswinkel und der aufgrund der Atmosphärenmasse ansteigenden Extinktion zunehmend geringer und strebt in der Zeit um den Sonnenuntergang gegen 0. Obwohl die Ausstrahlung der Oberfläche am Tag auch höher ist als in der Nacht, so ist die Strahlungsbilanz bis kurz vor Sonnenuntergang positiv, der Vertikalgradient der Temperatur negativ. Die Entwicklung der Lufttemperatur folgt dem. Die höchste Temperatur wird mit zeitlicher Verzögerung gegenüber dem Einstrahlungsmaximum meist am späten Mittag zwischen 13 Uhr und 15 Uhr erreicht. Dann beginnt vor allem durch Zunahme des Vertikalaustausches fühlbarer Wärme die Abkühlung, zuerst langsam, dann mit zunehmendem Gradienten. Nach dem Maximum des stündlichen Abkühlungsgradienten, welches sich im Laufe der Monate mit der Zeit des Sonnenunterganges verschiebt (etwa zwischen 17 Uhr und 21 Uhr), verläuft dann die weitere nächtliche Abkühlung mit zunehmend flacherer Kurve.

Man unterscheidet daher in der Geländeklimatologie drei Phasen der nächtlichen Abkühlungskurve:
- die Einschwingperiode,
- die Dämpfungsperiode,
- die Kriechperiode (Fig. 3).

1. Die Einschwingphase:

Sie beginnt mit der nachmittäglichen Abkühlung und reicht bis nach Sonnenuntergang. In ihr ist der stündliche Abkühlungsgradient hoch und erreicht sein Maximum.

2. Die Dämpfungsphase:

Sie umfaßt die späteren Abendstunden und die Zeit bis nach Mitternacht. Die Abkühlung ist noch deutlich, allerdings ist der Gradient gegenüber der Einschwingphase vermindert.

3. Die Kriechphase:

In den späten Nachtstunden, vor allem gegen Morgen, verändert sich die Lufttemperatur nur noch sehr langsam, die Abkühlung erfolgt nun gleichsam "kriechend".

Die Ursache für diese Abkühlung mit mehr und mehr vermindertem Gradienten liegt darin, daß die Temperaturentwicklung nach Abbau des tagesbedingten Wärmeüberschusses des Bodens und der bodennahen Luftschicht im Laufe der Nacht zunehmend dem Verhältnis zwischen der Ausstrahlung und der atmosphärischen Gegenstrahlung entspricht. Letztere ist stark abhängig von dem Wasserdampfgehalt der Luft und der relativen Feuchte. Bei wasserdampfreicher Luft und Luftfeuchten > 90 % (Vorkondensation) verläuft die Abkühlungskurve bedeutend flacher als bei wasserdampfarmer, "trockener" Atmosphäre. Sie zeigt jedoch in beiden Fällen meist die geschilderte Dreiteilung in Einschwingphase, Dämpfungsphase und Kriechphase.

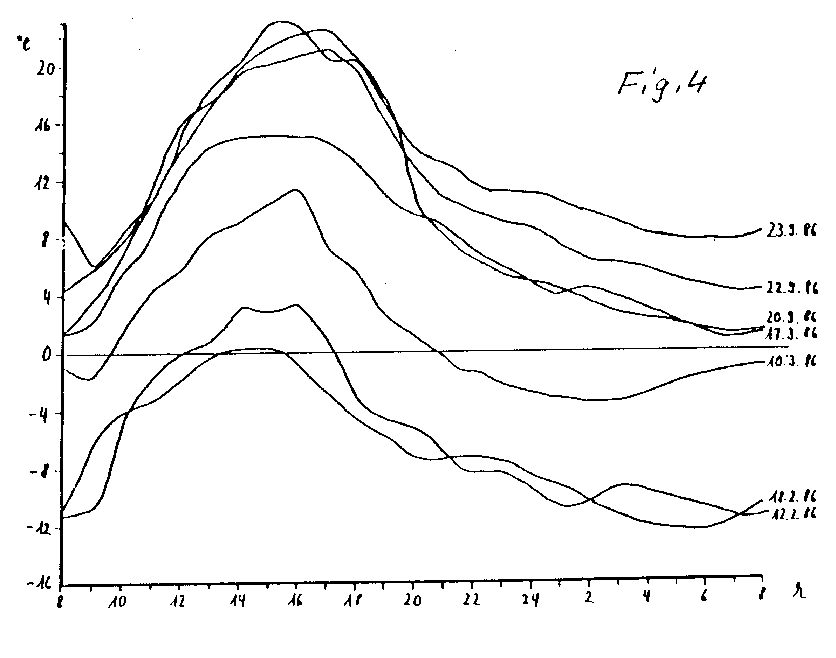

Am regelmäßigsten verläuft die Abkühlungskurve in Strahlungsnächten (Fig. 4). Wie Fig. 4 zeigt, wiederholt sich der Verlauf der nächtlichen Abkühlung dann in den verschiedensten Temperaturniveaus, bei Temperaturmaxima um 20° C wie um 0° C.

Hier kann die Vorhersage der nächtlichen Temperaturkurve ansetzen. Sie darf nicht von einer linearen Abkühlung ausgehen, sie muß eine Temperaturabnahme zuerst mit steigendem, später mit zunehmend abnehmendem Stundengradienten zugrundelegen. Diese Tatsache kann in einem Verarbeitungsprozeß des Computers einer Zentralstation berücksichtigt werden. Dieser tastet sich an der vorgegebenen Kurve der wahrscheinlichen Temperaturenwicklung entlang und trifft die Vorhersage, ob und wann bei der derzeitigen realen Temperatur der kritische Temperaturbereich zu erwarten ist. Allerdings reicht eine einzige Kurve nicht aus, sondern nur ein Kurvenbündel. Dies beruht auf folgenden Erwägungen:

a) Die Steilheit der Abkühlungskurve ist abhängig vom Wasserdampfgehalt der Atmosphäre und der Frage, ob Vorkondensation eingetreten ist. Ein hoher Wasserdampfgehalt und Luftmassen im Stadium der Vorkondensation behindern die Abkühlung und lassen die Kurve flacher verlaufen.

b) In Zeiten mit relativ hohem Sonnenstand (April, Mai, September, Oktober) ist der stündliche Abkühlungsgradient an Strahlungstagen größer als im Winter, weil der Unterschied in der Strahlungsbilanz zwischen Tag und Nacht größer ist (Fig. 4).

c) Der zeitliche Verlauf und die Dauer der drei nächtlichen Abkühlungsphasen verschieben sich mit der Jahreszeit. Im Winter setzt die Einschwingphase früher ein, und die Kriechphase dauert länger als im Frühjahr und Herbst (Fig. 4).

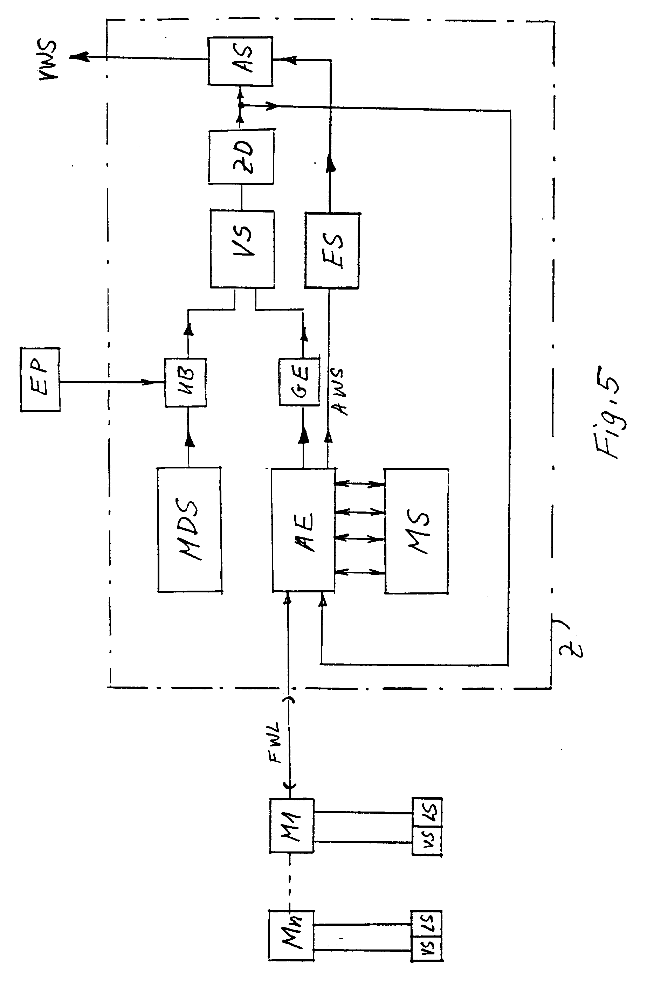

Das Verfahren gemäß der Erfindung umfaßt demnach die nachfolgenden Verfahrensschritte, die beispielsweise mittels eines Hardwareaufbaus gemäß Fig. 5 oder durch eine entsprechende Programmierung eines Rechners durchgeführt werden können. Für die Hardware-Realisierung wird folgendermaßen vorgegangen:

a) Abspeichern von Daten unterschiedlicher meteorologischer Modellfunktionen im Modelldatenspeicher MDS, die verschiedene Wetterlagen und jahreszeitliche Änderungen für einen vorgegebenen Ort berücksichtigen, und die eine vorgegebene Periode von 24 Stunden aufweisen.

b) entsprechend einem Grobtaktsignal beispielsweise mit einer Periode von 1 Stunde wiederholtes Messen meteorologischer Daten an dem vorgegebenen Ort Meßstationen M1 ... Mn durch wenigstens einen Verkehrsflächen- oder -unterbau-Sensor VS und einen benachbarten Luft-Sensor LS.

c) jeweils anschließendes Übertragen der Daten über die Fernwirkleitung FWL zur Zentralstation Z und dortiges Abspeichern im Meßdatenspeicher MS mindestens bis zum Eintreffen der im darauf folgenden Grobtakt übertragenen Daten.

d) Entscheiden mittels der Entscheiderstufe ES aufgrund eines aus den Daten mittels einer Auswerteeinheit AE gewonnenen Auswertesignals AWS, ob ein Vorwarnsignal VWS erzeugt und/oder ausgegeben werden soll.

e) Ermitteln des jeweiligen zeitlichen Gradienten aus mindestens zwei im Grobtakt aufeinander folgend übertragenen gleichartigen Daten oder daraus abgeleiteter Größen oder Ermitteln des zeitlichen Gradienten-Verlaufes in einer Gradienten-/Gradientenverlauf -Ermittlungsstufe GE.

f) Vergleichen des Gradienten bzw. -verlaufes oder einer daraus abgeleiteten Größe bzw. Größenverlaufes mit den zeitlich entsprechenden Gradienten bzw. -verläufen bzw. daraus abgeleiteten Größen bzw. -verläufen der Modellfunktionen mittels einer Vergleichsstufe VS.

g) Auswählen jener Modellfunktion, welche beim Vergleich die größte Übereinstimmung zeigt.

h) Ermitteln des Zeitdifferenzwertes mittels der Stufe ZD zwischen der aktuellen Zeit und demjenigen Zeitpunkt der ausgewählten Modellfunktion, an welchem die für eine Warnung, insbesondere vor Glätte auf der Verkehrsfläche, vorgegebenen Kriterien erfüllt sind.

i) Aufbereiten des Zeitdifferenzwertes zum Vorwarnsignal VWS und Ausgeben desselben mittels der Aufbereitungsstufe AS,

k) Korrigieren des Zeitdifferenzwertes aufgrund weiterer Messungen der Daten, sobald der aus den Daten ermittelte Gradient bzw. Gradientenverlauf mit dem Gradienten bzw. - verlauf einer anderen als der zuvor ausgewählten Modellfunktion besser übereinstimmt. Hierzu ist der Ausgang der Stufe ZD auf einen Eingang der Auswerteeinheit AE rückgeführt.

Für jede Meßstation wird für die einzelnen Monate oder für die meteorologischen Jahreszeiten (September bis November. Dezember bis Februar. März bis Mai) je ein Kurvenbündel der stündlichen (Grobtakt) Abkühlungsgradienten berechnet, gegliedert nach Tagen mit ungehinderter, wenig behinderter und behinderter Ausstrahlung. Diese Kurvenbündel werden als Modellfunktionen abgespeichert. Sobald die Abkühlung eingesetzt und damit der Abkühlungsgradient bestimmt werden kann, wird durch einen Vergleich der abgespeicherten Daten mit den aktuellen Daten die zu den Werten von Jahreszeit, Tageszeit und Abkühlungsgradient passende Abkühlungskurve, verfolgt und eine Vorhersage über den Zeitpunkt des Erreichens der kritischen Temperatur getroffen. Sollte die Entwicklung des Abkühlungsgradienten im weiteren Verlauf des Abends steiler oder flacher werden als es der gewählten Kurve entspricht, so wird in eine der anderen vorgegebenen Kurven "gesprungen" und eine neue Vorhersage - Vorwarnsignal VWS - getroffen. Auf diese Weise ist es möglich, den Zeitpunkt des Eintreffens der kritischen Temperatur um Stunden vorherzusagen und laufend zu korrigieren. Dadurch wird diese Methode "selbsteichend". Diese Methode kann durch Berücksichtigung der aktuellen Großwetterlage korrigiert werden. Durch externe zusätzliche Eingabe mittels eines Eingabeports EP können die abgespeicherten Werte der Modellfunktion umbewertet werden - Umbewertungstufe UB - dahingehend, daß der Gradientenverlauf der Modellfunktion der Großwetterlage angepaßt wird. Ergibt sich aufgrund der Großwetterlage beispielsweise ein zu erwartender Wetterumschwung zu tieferen Temperaturen hin, so muß der Gradientenverlauf der Modellfunktion stärker abfallend bewertet werden als es den abgespeicherten Werten entspricht.

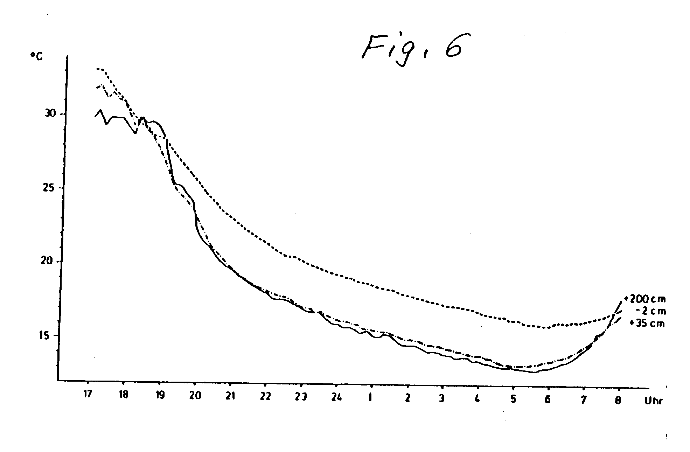

Die Entwicklung der Fahrbahntemperatur, auf die es in erster Linie ankommt, ist schwieriger vorherzubestimmen. Zwar entwickelt sich die Fahrbahntemperatur prinzipiell im Laufe der Nacht ähnlich wie die Lufttemperatur (Fig. 6), jedoch sind hier die jahreszeitlichen Unterschiede wohl noch größer als bei der Lufttemperatur.

Im Herbst hat der Boden vom Sommer her noch einen Temperatur-Überschuß gegenüber der Lufttemperatur, im Frühjahr dagegen ist er kälter als die Luft.

Es ist zweckmäßig die Gradienten für die Bodentemperaturen - Fahrbahntemperaturen - bezüglich der Erstellung der Modellfunktionen gleich zu behandeln wie die Lufttemperaturen und entsprechend abzuspeichern.

Die Methode der Temperatur-Vorhersage mittels abgespeicherter Bündel von Abkühlungskurven kann Reifglätte- und Eisglättegefahr vorhersagen, nicht das Einsetzen von Schneeglätte und Glatteis. Diese letzteren Glättearten sind nur über synoptische Messungen; d.h. Verknüpfung der Meßwerte mehrerer Meßstationen, vorherzusagen.

Die hier geschilderte interne Vorhersage kann sich in zwei Fällen nicht auf die eingegebenen Abkühlungskurven stützen, nämlich

- wenn es durch advektive Heranführung von Warmluft im Laufe der Nacht nicht zu einer deutlichen Abkühlung oder sogar zur Erwärmung kommt. Dieser Fall ist umproblematisch, denn dann wird die kritische Temperatur nicht erreicht, und die Zentralstation kann das Vorhandensein eines negativen Abkühlungsgradienten entsprechend deuten.
- wenn im Laufe der Nacht advektiv Kaltluft herangeführt wird. Dann ist der Abkühlungsgradient auch nach der Einschwingphase hoch. Nimmt der Gradient in der Zeit der üblichen Dämpfungsphase nicht ab, so müßte für diesen Fall für die Vorhersage eine lineare oder sogar exponentielle Kurve mit zunehmendem Gradienten vorgegeben werden. Die Vorhersage nennt dann für das Erreichen der kritischen Temperatur einen immer näheren Zeitpunkt.

Schließlich ist zu berücksichtigen, daß die verschiedenen Standorte, an denen das Frühwarnsystem eingesetzt wird, je nach ihrem Gelände-Charakteristika (Hähenlage über NN, Berg- oder Tallage, Lage über örtlichem Talgrund, Exposition, Vegetation der Umgebung) ihre spezifischen nächtlichen Abkühlungskurven haben. Um die zu berücksichtigen, werden den Geräten für das erste Jahr Standard-Kurven der Abkühlung von ähnlichen Standorten eingegeben. Aus den Messungen des ersten Winters lassen sich dann leicht spezifische Kurven dieses Standortes berechnen und abspeichern. Dadurch wird das Frühwarnsystem flexibler, weil sein Warnprogramm den Standortbedingungen des Gerätes angepaßt wird.

Alternativ dazu kann es fallweise genügen, mehrere an typischen Standorten entwickelte Kurvenbündel heranzuziehen, um eine hinreichende Vorhersage-Genauigkeit zu erzielen.

zu b) Methoden und Möglichkeiten einer synoptischen Vorhersage

Die synoptische Vorhersage beruht auf der gleichzeitigen Beobachtung und Auswertung der Meßdaten von mehreren Stationen, die über einen größeren Raum verteilt sind (z.B. entlang der Sauerland-Linie der BAB oder besser entlang aller Strecken des Autobahn-Netzes einer Region). Dabei ist ein Netz von Frühwarn-Stationen der Autobahnmeistereien denkbar, aber auch die Einbeziehung der entsprechenden Daten von den Stationen des Deutschen Wetterdienstes ist möglich. Je dichter das Stationsnetz ist, umso größer sind die Möglichkeiten der synoptischen Vorhersage.

Für die synoptische Glättewarnung benötigt man eine Reihe von Frühwarnstationen in charakteristischer räumlicher Verteilung, die mit einer Zentrale verbunden sind und ihre Daten laufend dorthin weitergeben. Die Zentrale hat die Aufgabe der synoptischen Auswertung aller Daten, der Vorhersage der Glätteentwicklung über größere Räume und der Frühwarnung der für seine Teilgebiete verantwortlichen Streudienste.

Die Vernetzung der Frühwarnstationen und die synoptische Auswertung aller Daten ersetzt die unter a) geschilderte interne Vorhersage der einzelnen Stationen nicht. Diese bleibt erhalten und für die örtliche Frühwarnung verfügbar. Sie ergänzt und erweitert jedoch die interne Vorhersage, indem sie aus den Einzelvorhersagen der Stationen generell gültige Vorhersagemuster für den Zeitpunkt des Erreichens der kritischen Temperatur in bestimmten Höhenlagen, bestimmten regionalen Bereichen oder bestimmten Reliefpositionen entwickelt. Dadurch kann die Frühwarnung für Reifglätte und Eisglätte großräumig vorgenommen werden. Zusätzlich ist ein synoptisches Meßsystem in der Lage, auch die Glättearten vorherzusagen, bei denen die Frühwarnung des internen Systems nicht funktionieren kann; die Schneeglätte und das Glatteis.

Die Möglichkeiten der Synopse seien an einigen charakteristischen Beispielen erläutert:

Beispiel 1: Die synoptische Auswertung der Stationsmeldungen zeigt an, daß im Laufe der Nacht die kritische Temperatur bei fast allen über 400 m NN gelegenen Stationen erreicht werden dürfte, während die niedriger gelegenen Stationen keine Gefahr vorhersagen. In diesem Falle kann eine Frühwarnung für alle hochgelegenen Autobahnstücke der Region ausgegeben werden.

Beispiel 2. Bei Inversions-Wetterlagen sammelt sich die Kaltluft in den Tal- und Beckenlagen, während die Höhen deutlich höhere Temperaturen aufweisen. Eine solche Situation würde bei den niedrig gelegenen Sationen den Frühwarnalarm auslösen, bei den hochgelegenen nicht. Die Frühwarnung könnte dann alle Autobahnstücke in Tal- und Beckenlage umfassen.

Beispiel 3: Das Vordringen von advektiv herangeführter Kaltluft läßt sich in seiner Ausdehnung und im zeitlichen Ablauf auch in seiner Geschwindigkeit verfolgen. Dadurch kann eine Frühwarnung auch für die Teile einer Region erfolgen, die derzeit von der Kaltluft noch nicht erreicht sind.

Beispiel 4: Sind die einlaufenden Meldungen von den Stationen so uneinheitlich, daß sich daraus kein logisches Verteilungsmuster der Frühwarnung ergibt, so kann die Empfehlung gegeben werden, daß sich die Autobahnmeistereien auf die interne Vorhersage der Frühwarnsysteme in ihrem Bereich stützen.

Beispiel 5: Nur über die synoptische Auswertung kann die Ausdehung von Niederschlagsfronten und ihr Voranschreiten verfolgt werden. Vor Schneefall und der Gefahr auftretender Schneeglätte, aber auch vor Eisregen und Glatteis, kann nur so eine Frühwarnung erfolgen, während die interne Vorhersage der einzelnen Stationen nur das bereits eingetroffene Ereignis registriert.

Das System der synoptischen Vorhersage baut auf den Messungen der Einzelstationen auf und verknüpft diese miteinander. Es stellt daher keine Alternative zum System der internen Vorhersage dar, sondern es ergänzt es und erweitert damit die Möglichkeit der Frühwarnung.

Um eine interne Vorhersage mit möglichst großem zeitlichen Vorlauf zu gewährleisten, sind folgende Grundsätze zu beachten:

1. Die Überprüfung der Sensorik erfordert laufende Überwachung. Nur der routinemäßige Vergleich zwischen der Anzeige der Geräte und dem tatsächlichen Fahrbahnzustand führt zur Erkenntnis, was die einzelnen Teile der Sensorik zu leisten vermögen und welche von ihnen ggf. entbehrlich sind.

2. Die Wahl der zu messenden Parameter muß sich an der Frage orientieren, welchen Beitrag die Parameter zur Erkennung der derzeitigen Glättegefahr oder zu ihrer Vorhersage leisten.

3. Das genannte Modellschema sieht bei Ereichung des kritischen Wertes von TF eine Abfrageroutine vor, die entweder Gefahr oder Vorwarnung der Reifglätte, Eisglätte, Schneeglätte und des Glatteises oder aber keine Gefahr signalisiert. Die Aussage stützt sich dabei auf bestimmte Parameter-Konstellationen. Bedarfsweise kann das Modell durch weitere Parameter ergänzt werden. Der routinemäßige Vergleich zwischen der Aussage des Modells und dem Zustand der Straßendecke sollte dann in kurzen Abständen erfolgen, wenn TF im kritischen Bereich ist. Ereignisse, die in der Natur seltener auftreten (Frostwechsel, Niederschlag auf gefrorener Fahrbahn) können durch Erfahrungswerte Berücksichtigung finden.

Zur Überprüfung des Modells der Abfrage ist bei Erreichung einer Fahrbahntemperatur um 0° C und darunter die Auslösung einer Abfrage-Routine durch den Computer/die Hardware-Realisierung des Frühwarnsystems vorgesehen. Im Winterbetrieb ist zu überprüfen:

- ob die vorhandene Sensorik das Modell ohne die Messung weiterer Parameter voll mit Daten "füllen" kann
- ob dieses Modell ausreicht oder zu ergänzen bzw. zu vereinfachen ist
- wo die Schwellwerte liegen, bei denen die Routine-Abfrage in die eine oder in die andere Richtung des Modells weitergeführt wird
- in wieviel Prozent aller Fälle die Aussage tatsächlich dem Straßenzustand entspricht.

Eine Vorhersage kann nur den Weg beschreiten, aus der momentanen Temperatur und der bisher gemessenen Abkühlungsgröße zu errechnen, ob und wann vermutlich der kritische Temperaturwert von TL und TF erreicht ist. Die Abkühlungskurve verläuft nicht linear, sondern im Laufe der Abkühlung zuerst mit steigendem, später mit geringer werdendem Gradienten. Die diesbezüglichen Einflußgrößen sind die Jahreszeit, die Tageszeit, der Feuchtigkeitsgehalt der Atmosphäre und die örtlichen Bedingungen von Relief, Exposition und Vegetation der Umgebung.

Die Berechung der Kurvenbündel für die Modellfunktionen geht von der wahrscheinlichen Abkühlung aus. Sie werden in den Computer einprogrammiert bzw. abgespeichert. Sobald die Abkühlung einsetzt, wählt sich der Computer/die Hardware-Realisierung die passende Abkühlungskurve und berechnet aus ihr, ob und wann vermutlich der kritische Temperaturbereich erreicht wird. Anhand des weiteren Temperaturverlaufes wird die Vorhersage laufend kontrolliert und wenn nötig korrigiert.

Um Störeinflüsse auszuschließen, die insbesondere durch das Vorbeifahren von Kraftfahrzeugen an den Meßstationen hervorgerufen werden und die Meßdaten verfälschen können, ist es zweckmäßig über mehrere aufeinanderfolgend gemessene Daten zu mitteln. Alternativ dazu können solche Störeinflüsse aktiv ausgeblendet werden, beispielsweise dadurch, daß Messungen während des Auftretens dieser Störeinflüsse nicht vorgenommen werden, etwa durch Variieren des Grobtaktsignals. Die Störeinflüsse werden beispielsweise durch in den Verkehrsflächen/Fahrbahnen verlegte Induktionsschleifen registriert. Messungen, z.B. Aussenden von Infrarotimpulsen und Erfassen der zurückgeworfenen Strahlung werden erst nach einer vorgegebenen Vorhaltezeit nach dem Registrieren der Störeinflüsse vorgenommen. Die Registrierung der Störeinflüsse kann alternativ durch Lichtschranken oder Radar erfolgen.

**Patentansprüche**

1. Verfahren zum Ausgeben eines Vorwarnsignals, insbesondere für die Gefahr von Glätte auf einer Verkehrsfläche, aufgrund der Ermittlung von Witterungseinflüssen mit folgenden Verfahrensschritten:
   a) Abspeichern von Daten unterschiedlicher meteorologischer Modellfunktionen, die verschiedene Wetterlagen und jahreszeitliche Änderungen für einen vorgegebenen Ort berücksichtigen, und die eine vorgegebene Periode aufweisen,
   b) entsprechend einem Grobtaktsignal wiederholtes Messen meteorologischer Daten an dem vorgegebenen Ort durch wenigstens einen Verkehrsflächen- oder -unterbau-Sensor und einen benachbarten Luft-Sensor,
   c) jeweils anschließendes Übertragen der Daten zu einer Station und dortiges Abspeichern mindestens bis zum Eintreffen der im darauf folgenden Grobtakt übertragenen Daten,
   d) Entscheiden aufgrund eines aus den Daten gewonnenen Auswertesignals, ob ein Vorwarnsignal erzeugt und/oder ausgegeben werden soll,
   e) Ermitteln des jeweiligen zeitlichen Gradienten aus mindestens zwei im Grobtakt aufeinander folgend übertragenen gleichartigen Daten oder daraus abgeleiteter Größen oder Ermitteln des zeitlichen Gradienten-Verlaufes,
   f) Vergleichen des Gradienten bzw. -verlaufes oder einer daraus abgeleiteten Größe bzw. Größenverlaufes mit den zeitlich entsprechenden Gradienten bzw. -verläufen bzw. daraus abgeleiteten Größen bzw. -verläufen der Modellfunktionen,
   g) Auswählen jener Modellfunktion, welche beim Vergleich die größte Übereinstimmung zeigt,
   h) Ermitteln des Zeitdifferenzwertes zwischen der aktuellen Zeit und demjenigen Zeitpunkt der ausgewählten Modellfunktion, an welchem die für eine Warnung, insbesondere vor Glätte auf der Verkehrsfläche, vorgegebenen Kriterien erfüllt sind.
   i) Aufbereiten des Zeitdifferenzwertes zum Vorwarnsignal und Ausgeben desselben,
   k) Korrigieren des Zeitdifferenzwertes aufgrund weiterer Messungen der Daten, sobald der aus den Daten ermittelte Gradient bzw. Gradientenverlauf mit dem Gradienten bzw. - verlauf einer anderen als der zuvor ausgewählten Modellfunktion besser übereinstimmt.

2. Verfahren nach Anspruch 1, gekennzeichnet durch das Mitteln der gemessenen Daten zur Korrektur von Störeinflüssen, die insbesondere durch das Vorbeifahren von Kraftfahrzeugen am Meßort hervorgerufen werden.

3. Verfahren nach Anspruch 1, gekennzeichnet durch aktives Ausblenden von durch Störeinflüsse verfälschten Meßwerten.

4. Verfahren nach Anspruch 1, gekennzeichnet durch Variieren des Grobtaktsignals bei Vorhandensein von Störeinflüssen.

5. Verfahren nach Anspruch 4, gekennzeichnet durch Erfassen und Auswerten des Auftretens von Störeinflüssen derart, daß Messungen erst nach Abklingen der Störeinflüsse vorgenommen werden.

6. Verfahren nach Anspruch 5, gekennzeichnet durch Registrieren von Störeinflüssen mittels mindestens einer in der Verkehrsfläche verlegten Induktionsschleife und Messen der meteorologischen Daten nach einer vorgegebenen Vorhaltezeit nach dem Registrieren von Störeinflüssen.

7. Verfahren nach einem der Ansprüche 1 bis 6, gekennzeichnet durch Umbewerten der abgespeicherten Werte der Modellfunktion dahingehend, daß der Gradientenverlauf der Modellfunktion einem zu erwartenden Wetterverlauf - Großwetterlage - angepaßt wird.

8. Verfahren nach einem der Ansprüche 1 bis 6, gekennzeichnet durch synoptisches Verknüpfen der Meßdaten von mehreren Meßorten zur Aufbereitung des Vorwarnsignals.

**Claims**

1. Method of issuing an early warning signal, in particular for the risk of slipperiness on a traffic surface, on the basis of the detection of weather effects, comprising the following method steps:

a) storage of data of different meteorological model functions, which take into consideration the various weather conditions and annual changes for a predetermined location and which have a predetermined period,

b) repeated measurement, in accordance with a coarse timing signal, of meteorological data at the predetermined location by at least one traffic surface sensor or traffic surface foundation sensor and an adjacent air sensor,

c) transmission, following on each time, of data to a station and storage therein at least until arrival of the data transmitted in the coarse time cycle following thereon,

d) decision, on the basis of an evaluating signal obtained from the data, whether an early warning signal shall be generated and/or issued,

e) ascertaining of the respective temporal gradients from at least two similar items of data transmitted in succession in a coarse time cycle or of magnitudes derived therefrom or ascertaining of the temporal gradient course,

f) comparison of the gradients or gradient course or of a magnitude or magnitude course derived therefrom with the temporally corresponding gradients or gradient courses or magnitudes or magnitude courses derived therefrom of the model functions,

g) selection of that model function which shows the greatest agreement in the comparison,

h) ascertaining of the time difference value between the actual time and that point in time of the selected model function at which the predetermined criteria for a warning, especially in advance of slipperiness on the traffic surface, are fulfilled,

i) preparation of the time difference value for the early warning signal and issue thereof,

k) correction of the time difference value on the basis of further measurements of the data as soon as the gradient or gradient course ascertained from the data agrees better with the gradients or gradient course of another model function than with the previously selected model function.

2. Method according to claim 1, characterised by the ascertaining of the measured data for the correction of disturbing influences, which are caused in particular by the travelling past of motor vehicles at the measurement location.

3. Method according to claim 1, characterised by active screening out of measured values falsified by disturbing influences.

4. Method according to claim 1, characterised by variation of the coarse time signal in the presence of disturbing influences.

5. Method according to claim 4, characterised by detection and evaluation of the occurrence of disturbing influences in such a manner that measurements are undertaken only after fading away of the disturbing influences.

6. Method according to claim 5, characterised by registration of disturbing influences by means of at least one induction loop placed in the traffic surface and measurement of the meteorological data after a predetermined lead time after the registration of disturbing influences.

7. Method according to one of claims 1 to 6, characterised by weighting of the stored values of the model function to the effect that the gradient course of the model function is matched to a weather course - general weather conditions - to be expected.

8. Method according to one of claims 1 to 6, characterised by synoptic linking of measured data of several measurement locations for the preparation of the early warning signal.

**Revendications**

1. Procédé pour émettre un signal de présignalisation concernant notamment le risque de glissance sur la surface d'une chaussée, en se basant sur la détermination d'influences météorologiques, comportant les étapes suivantes :

a) dépôt en mémoire de données de différentes fonctions-modèles météorologiques tenant compte de diverses situations météorologiques et de variations annuelles pour un lieu déterminé, et présentant une période prédéterminée,

b) mesure répétée, en correspondance avec un signal de rythme grossier, de données météorologiques à l'endroit prédéterminé, au moyen d'au moins un capteur de surface de chaussée ou d'un capteur sous-jacent et d'un capteur d'air voisin,

c) à la suite de chaque mesure, transmission des données à une station et mise en mémoire au moins jusqu'à l'arrivée des données transmises dans le rythme grossier suivant,

d) décision, sur la base d'un signal d'interprétation acquis à partir des données, de ce qu'il y a lieu ou non de produire et/ou d'émettre un signal de présignalisation,

e) détermination du gradient temporel d'au moins deux données de même nature successivement transmises à la cadence du rythme grossier, ou de grandeurs tirées de celles-ci, ou détermination de l'évolution du gradient temporel,

f) comparaison du gradient ou de l'évolution, ou d'une grandeur qui en est tirée, ou encore de l'évolution de cette grandeur, aux gradients temporellement correspondants, ou encore aux évolutions ou grandeurs qui en sont tirées, ou encore aux évolutions des fonctions-modèles,

g) sélection de la fonction-modèle présentant le meilleur accord lors de la comparaison,

h) détermination de la valeur de différence de temps entre le temps actuel et l'instant de la fonction-modèle sélectionnée pour lequel sont satisfaits les critères prédéterminés pour un avertissement concernant notamment la glissance sur la surface de la chaussée,

i) traitement de la valeur de différence de temps pour préparer le signal de présignalisation, et émission de celui-ci,

k) correction de la valeur de différence de temps sur la base d'autres mesures des données, dès que le gradient ou l'évolution du gradient obtenu à partir des données s'accorde mieux avec le gradient ou l'évolution de gradient d'une fonction-modèle autre que celle sélectionnée précédemment.

2. Procédé selon revendication 1, caractérisé par la formation d'une moyenne des données mesurées, afin de corriger les influences parasites provoquées notamment par le passage de véhicules dans la région du lieu de mesure.

3. Procédé selon revendication 1, caractérisé par un masquage actif de valeurs de mesure faussées par des influences parasites.

4. Procédé selon revendication 1, caractérisé par la variation du signal de rythme grossier en cas d'occurrence d'influences parasites.

5. Procédé selon revendication 4, caractérisé par la saisie et l'interprétation de l'occurrence d'influences parasites de manière telle que des mesures ne soient effectuées qu'après amortissement des influences parasites.

6. Procédé selon revendication 5, caractérisé par l'enregistrement d'influences parasites au moyen d'au moins une boucle d'induction posée sur ou dans la chaussée, et par la mesure des données météorologiques après un temps de réserve prédéterminé après l'enregistrement d'influences parasites.

7. Procédé selon l'une des revendications 1 à 6, caractérisé par la modification de valeurs mémorisées de la fonction-modèle de manière que l'évolution du ou des gradients de cette fonction-modèle soit adaptée à une évolution météorologique prévisible telle que la situation météorologique à grande échelle.

8. Procédé selon l'une des revendications 1 à 6, caractérisé par la combinaison synoptique des données mesurées provenant de plusieurs lieux de mesure, pour préparer le signal de présignalisation.

TF

deutlich 0°C ———→ keine Gefahr

unter 0°C ———→ FFB

trocken ———→ keine Gefahr

feucht ———→ SR ———→ rechnerischer Gefrierpunkt

Vergleich TF / Gefrierpunkt

keine akute Gefahr ———→ Vorwarnung

akute Gefahr ———→ Alarm

FIG.1

EP 0 292 639 B1

TF

keine Gefahr ← deutlich>0°C
um 0°C
deutlich<0°C

FFB
FFB

Gefahr Glatteis ← nein ← Infrarot Sensorik Schneedecke ← ja ← NFM ← trocken
feucht
feucht
trocken → NFM → ja → Infrarot Sensorik Schneedecke → nein → Gefahr Glatteis

ja
nein
SR
SR
nein
ja

Gefahr Schneeglätte ← ja ← Infrarot Sensorik Schneedecke
rechnerischer Gefrierpunkt
Infrarot Sensorik Schneedecke → ja → Gefahr Schneeglätte

nein
Gefahr Eisglätte
nein

Vergleich TF/TL
keine akute Gefahr der Eisglätte
Vergleich TF/TL

keine Gefahr ← TL<TF TL>TF
NFM
TL>TF TL<TF → keine Gefahr

<85%
ja
nein
<85% → keine Gefahr

Vorwarnung Reifglätte ← >85% ← FL
Gefahr der Heraufsetzung des rechnerischen Gefrierpunktes
Vergleich TF/TL
FL
> 85% → Gefahr Reifglätte

Infrarot Sensorik Schneedecke
TL <TF
TL >TF

FIG. 2
nein
ja
Tendenz zur Eisglätte-Entwicklung
WW
<1,5m/sec >1,5m/sec

Vorwarnung Eisglätte
Vorwarnung Schneeglätte/ Eisglätte
keine Gefahr

Fig. 3

Fig.4

Fig.5

EP 0 292 639 B1

Fig. 6